# EUROPÄISCHE PATENTSCHRIFT

(11) **EP 1 240 878 B1**
(45) Veröffentlichungstag und Bekanntmachung des Hinweises auf die Patenterteilung: **02.01.2004**
(21) Anmeldenummer: 02000012.1
(22) Anmeldetag: 02.01.2002
(51) Int. Cl.: A61C 13/087, B29C 67/00

(54) **Verfahren zur Herstellung eines Kunststoffteils und Dentalrestaurationsteil**
Method for producing a plastic part and element of dental restauration
Procédé pour produire une pièce en plastique et élément de restauration dentaire

(30) Priorität: 12.03.2001 DE 10111704
(43) Veröffentlichungstag der Anmeldung: 18.09.2002
(73) Patentinhaber: Firma Ivoclar Vivadent AG, 9494 Schaan (LI)
(72) Erfinder: Zanghellini, Gerhard, 9494 Schaan (LI); Wachter, Wolfgang, 9494 Schaan (LI); Kunkel, Peter, 9495 Triesen (LI); Rheinberger, Volker, Dr., 9490 Vaduz (LI)
(74) Vertreter: Baronetzky, Klaus, Dipl.-Ing.

(56) Entgegenhaltungen:
- EP-A- 0 661 156
- WO-A-01/13814
- US-B1- 6 193 923

## Beschreibung

Die Erfindung betrifft ein Verfahren zur Herstellung eines Kunststoffteils, gemäß dem Oberbegriff von Anspruch 1.

Aus der DE 196 42 247 ist ein Verfahren zur Herstellung von Zahnersatz bekannt, bei dem zunächst dreidimensionale Reproduktionsdaten erfasst und für die Herstellung des Zahnersatzes aufbereitet werden. Bei diesem Verfahren wird eine elektronisch gesteuerte Werkzeugmaschine eingesetzt, um eine schnelle Erzeugung eines Prototypen zu gewährleisten. Zwar lässt sich mit diesem Verfahren der Zahnersatz recht genau herstellen. Das Herstellverfahren ist jedoch recht aufwendig und bedingt eine elektronisch gesteuerte Werkzeugmaschine, die mittels eines Fräsverfahrens die gewünschte Bearbeitung vornimmt.

Dieses Verfahren hat jedoch Nachteile, denn es entstehen Abfälle und Verunreinigungen, die in der zahnärztlichen Praxis nicht tolerierbar sind, auch wenn der Einsatz in Dentallabors möglich ist.

Ferner ist es an sich bekannt, eine dreidimensionale Drucktechnik für die schnelle Herstellung von Prototypen zu verwenden. Hierbei kommen zwei Verfahren zum Einsatz: Beim ersten Verfahren, das vom Massachusetts Institute of Technology entwickelt wurde, wird ein pulveriges Material über eine Düsenanordnung schichtweise entsprechend dem herzustellenden Objekt mit Bindemittel versehen und das Bindemittel wird schichtweise ausgehärtet und bindet das Pulver ab. Bei diesem Verfahren wird nach dem Fertigstellen des Objekts das überschüssige, ungebundene Pulver entfernt. Bei dieser Lösung besteht eine freie Wahlmöglichkeit hinsichtlich des Pulvers, wobei jedoch regelmäßig eine körnige Oberfläche verbleibt.

Bei einem weiteren Verfahren wird mittels der dreidimensionalen Drucktechnik über elektrostatische Tintenstrahldüsen ein an Luft aushärtendes Material aufgebracht. Dieses Material wird mit einem tintenstrahldruckerähnlichen Gerät, das eine erhöhte Anzahl von Düsen aufweist, aufgetragen. Aufgrund der erforderlichen Durchhärtung ist jedes Materialteilchen recht klein, so dass die Herstellung entsprechend länge Zeit benötigt.

Ferner sind weitere Verfahren zur schnellen Herstellung von Objekten bekannt geworden, die gemeinhin als "Rapid Prototyping"-Verfahren aufgeführt werden. Hierzu gehört die bereits in den 80er Jahren entwickelte Stereolithografie insbesondere der Firma 3D Systems Inc., die basierend auf CAD-Daten mittels eines Laserstrahls Material in Scheibenform abträgt. Derartige Vorrichtungen erfordern erhebliche Investitionskosten von beispielsweise einer halben oder einer Million DM.

US-A-6,193,923 zeigt ein Vefahren nach dem Oberbegrift des Anspruches 1.

Auch ist es vorgeschlagen worden, das Laser-Sinter-Verfahren zur Realisierung von Zahnersatzteilen zu verwenden. Auch dieses Verfahren erfordert seinem Namen entsprechend die Verwendung eines hochenergetischen Lasers, was verschiedene Nachteile mit sich bringt.

Daher liegt der Erfindung die Aufgabe zugrunde, ein Verfahren zur Herstellung eines Kunststoffteils, insbesondere eines Dentalrestaurationsteils, gemäß dem Oberbegriff von Anspruch 1 zu schaffen, das geringere Investitionskosten erfordert und eine rasche Herstellung des Kunststoffteils ermöglicht.

Diese Aufgabe wird erfindungsgemäß durch Anspruch 1 gelöst.

Vorteilhafte Weiterbildungen ergeben sich aus den Unteransprüchen.

Mit dem erfindungsgemäßen Verfahren lassen sich zunächst gegenüber dem bekannten Verfahren vergrößerte Tropfengrößen verwenden, nachdem die Durchhärtung mittels Lichtpolymerisation es erlaubt, eine einmal aufgetragene Schicht rasch zu festigen. Dies erlaubt es aber andererseits, mit preisgünstigeren Druckverfahren auszukommen, so dass die Anzahl der Düsen, die wesentlich zu den Herstellungskosten beiträgt, reduziert werden kann. Dennoch ergibt sich aufgrund der großen Tropfengröße eine rascher Aufbau des herzustellenden Kunststoffteils oder Objekts, wobei in besonders vorteilhafter Ausführung der Erfindung die Durchhärtung der gerade betrachteten Schicht nur unvollständig vorgenommen wird und erst durch die nachfolgende Schicht hindurch abgeschlossen wird. Dies ergibt zudem den besonderen Vorteil, dass die Schichten besser aneinander haften. Erfindungsgemäß ist es besonders günstig, eine Dentalrestauration aus ungefüllten polymerisierbaren Monomeren und/oder Oligomeren bereitzustellen. Eine derartige Dentalrestauration läßt sich in besonders günstiger Weise für eine Vollprothese, aber auch für eine Teilprothese verwenden. Derartige Prothesen weisen eine erhebliche Materialstärke auf, die sich erfindungsgemäß in gleichmäßig durchgehärteter Weise realisieren läßt.

Gegenüber dem bekannten Verfahren besteht lediglich die Notwendigkeit, die Düsenanordnung während der Lichthärtung optisch eindeutig abzuschirmen, um ein Verstopfen der Düsen durch intensive Lichtbestrahlung zu verhindern.

Geeignete Lichtquellen sind bekannt, wobei es bevorzugt ist, auch UV-Komponenten in dem Lichthärtspektrum vorzusehen.

Gemäß einem weiteren, besonders günstigen Aspekt der Erfindung lässt sich das erfindungsgemäße Verfahren gerade auch in den Zahnarztpraxen einsetzen. Es entstehen keine Fräsabfälle und sonstige Verunreinigungen; insofern ist das Verfahren vergleichbar mit dem Lichthärten, das der Zahnarzt bei der Verwendung von Lichthärtgeräten in dem Mund des Patienten ohnehin häufig ausführt.

Gemäß einem weiteren, besonders günstigen Gesichtspunkt lässt sich das erfindungsgemäße Monomer mit einer wachsartigen Substanz anreichern. Diese Substanz erlaubt es, die richtige Viskosität einzustellen, die ein Verlaufen nach Auftragen des jeweiligen Tröpfchens zur Schichtbildung verhindert, aber andererseits so gering ist, dass ein Durchtreten der Düse in der günstigen Weise möglich ist. Besonders vorteilhaft ist es, wenn diese wachsartige Substanz reaktive Gruppen enthält, die mit dem Monomer copolymerisieren können.

Die Drucktechnik, die erfindungsgemäß hier eingesetzt werden kann, entspricht im wesentlichen dem bewährten Tintenstrahl-Druckverfahren, wobei es sich versteht, dass die Düsenanordnung in der gewünschten Weise angepasst ist.

Gemäß einer vorteilhaften Ausgestaltung der Erfindung ist es vorgesehen, den Schichtaufbau des herzustellenden Kunststoffteils so zu gestalten, dass die Farbgebung der Dentalrestauration durch die eingefärbten Materialien der natürlichen Färbung im Munde der Patienten angepasst ist.

In einer weiteren vorteilhaften Ausgestaltung der Erfindung ist die Transparenz der jeweils aufgebrachten Schicht größer als die jeweils vorhergegangene, so dass die Dentalrestauration in vorbildlicher Weise der natürlichen Farbe der Mundsituation entspricht. Diese Ausgestaltung ist besonders vorteilhaft für die Herstellung von zahnfarbenen Kronen, Brücken, Inlays und Onlays.

Weitere Vorteile, Einzelheiten und Merkmale ergeben sich aus der nachstehenden Beschreibung eines Ausführungsbeispiels.

Es zeigen:
- Fig. 1: eine Ansicht einer Vorrichtung für die Realisierung des erfindungsgemäßen Verfahrens in schematischer Form;
- Fig. 2: eine weitere Ansicht der Vorrichtung gemäß Fig. 1 während eines anderen Verfahrensschritts
- Fig. 3a und b: zwei verschiedene mögliche Anordnungen der erfindungsgemäßen Düsen; und
- Fig. 4: eine modifizierte Ausgestaltung einer Vorrichtung für die Durchführung des erfindungsgemäßen Verfahrens.

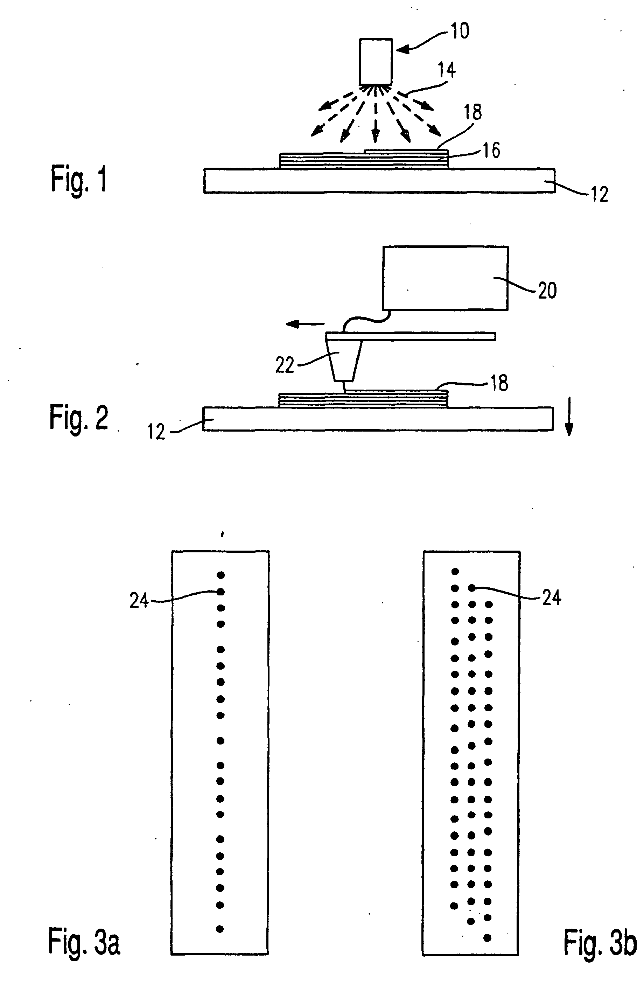

Aus Fig. 1 ist eine Vorrichtung für die Realisierung des erfindungsgemäßen Verfahrens in schematischer Form zu ersehen. Es ist eine Düsenanordnung 10 vorgesehen, die mit ihren Düsen auf eine Unterlage 12 ausgerichtet ist. Die Düsenanordnung, die beispielsweise gemäß den beiden Formen in Fig. 3 ausgestaltet sein kann, lässt Kunststoffmaterial 14 austreten. Das Kunststoffmaterial 14 wird schichtweise auf der Unterlage 12 aufgebracht, wobei in der Darstellung gemäß Fig. 1 vier Schichten 16 vollständig aufgebracht sind, während eine Schicht 18 lediglich teilweise aufgebracht ist. Für das Aufbringen erfolgt eine Relativbewegung zwischen der Düsenanordnung 10 und der Unterlage 12. Für die Herstellung einer Dentalrestauration ist bevorzugt die Düsenanordnung 10 feststehend montiert, während die Unterlage horizontal beweglich ist.

Die Schichten werden bevorzugt in einer geringen Schichtstärke, die eine präzise Formung des Restaurationsteils erlaubt, aufgetragen, beispielsweise in einer Schichtstärke von 100 Mikrometern. Gemäß einer modifizierten Ausgestaltung ist die Schichtstärke sogar auf 20 Mikrometer reduziert.

Die Formgebung des Restaurationsteils kann nun so erfolgen, dass an den Stellen, an denen erhabene Formen erzielt werden sollen, Material in höheren Schichten aufgebracht wird, während die diese umgebenden Bereiche freigelassen werden. Für die Realisierung eines komplexen dreidimensionalen Restaurationsteils ist es auch möglich, die Unterlage 12 als Teilungsebene zu verwenden und zwei separate Teil-Restaurationsteile auszubilden, die Rücken an Rücken aneinander befestigt werden. Für die präzise Befestigung können Justierungsmarkierungen aufgespritzt werden, die nach der Befestigung der Teile aneinander entfernt werden können. Die Befestigung kann beispielsweise durch Kleben, Heißpressen oder dergleichen erfolgen.

Das aufgebrachte Restaurationsteil ist zunächst noch weich und nicht belastbar. Durch eine Aushärtung mittels einer Polymerisationsvorrichtung 20 gemäß Fig. 2 lässt sich die gewünschte Aushärtung bereitstellen. Hierzu ist bevorzugt eine Lichtquelle 22 vorgesehen, die ebenso wie die Düsenanordnung 10 eine Relativbewegung gegenüber der Unterlage 12 ermöglicht. Bevorzugt erfolgt das Aushärten über die Lichthärtung jedesmal dann, wenn eine Schicht 18 aufgetragen ist.

Es versteht sich, dass anstelle der reinen Lichthärtung auch eine Wärmepolymerisation oder Kombinationen hiervon möglich sind.

Die Unterlage 12 ist zudem vertikal beweglich, um den Schichtaufbau der Schichten 16 und 18 nach und nach Rechnung zu tragen.

Aus Fig. 3 sind zwei verschiedene mögliche Anordnungen von Düsen 24 ersichtlich. Gemäß Fig. 3a sind die Düsen in einer Reihe angeordnet. Demgegenüber sind sie gemäß Fig. 3b in drei Reihen angeordnet, wobei die Reihen etwas gegeneinander versetzt sind. Mit der Anordnung gemäß 3b lässt sich die Auflösung noch etwas verbessern.

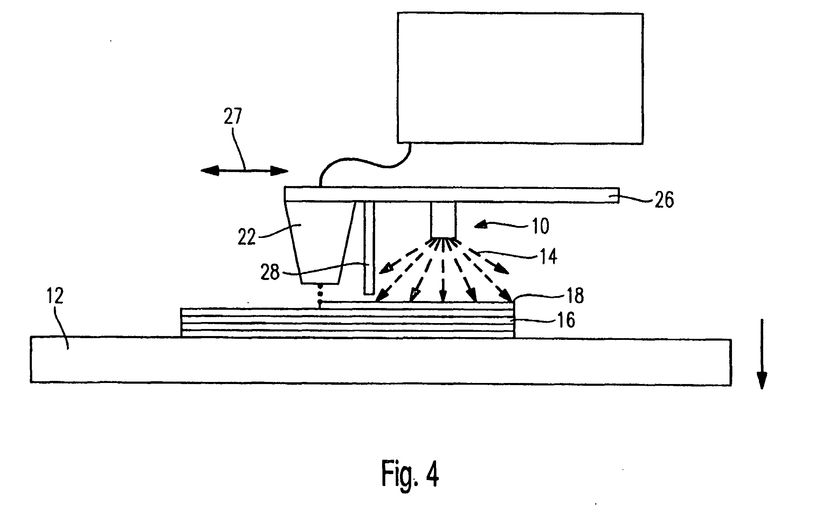

Eine modifizierte Ausgestaltung ist aus Fig. 4 ersichtlich. Bei dieser Lösung sind die Lichtquelle 22 und die Düsenanordnung 10 an einem gemeinsamen Träger 26 befestigt. Diese Lösung erlaubt das Auftragen des Kunststoffmaterials 14 und Härten des Materials in einem Zuge. Hierzu erfolgt eine Relativbewegung zwischen der Unterlage 12 und dem Träger 26 entsprechend dem Ausführungsbeispiel gemäß Fig. 1 und 2. Beispielsweise wird die Unterlage 12 entsprechend dem Pfeil 27 von rechts nach links bewegt. Hierdurch ist sichergestellt, dass ein betrachteter Bereich der Schicht 16 zunächst unterhalb der Düsenanordnung 10 und dann unterhalb der Lichtquelle 22 ist.

Um ein vorzeitiges Aushärten und auch ein Verstopfen der Düsen der Düsenanordnung 10 sicher zu verhindern, ist zwischen der Düsenanordnung 10 und der Lichtquelle 22 eine Blende 28 vorgesehen, die bis zu der Schicht 18 reicht. Bevorzugt ist die Blende 28 mindestens in ihrem unteren Bereich weich, so dass sie den Schichtaufbau der obersten Schicht 18 nicht beeinträchtigt. Beispielsweise kann auch ein dünner Vorhang aus einer schwarzen Kunststofffolie eingesetzt werden.

Für die Erzeugung eines erfindungsgemäß hergestellten Zahnersatzteils kann auch ein bereits auf dem Markt erhältlicher Drucker für das dreidimensionale Druckverfahren, der für das vorstehend erläuterte MIT-Verfahren bestimmt ist, mit polymerisierbarem Dentalmaterial aus einem polymerisierbaren Monomer oder Oligomer einem Polymerisationsinitiator und einer wachsartigen polymerisierbaren Substanz beschickt werden. Als wachsartige Substanz wird der Ester eines Alkohols mit einem polymerisationsfähigen Karbonsäurederivat verwendet.

Nach dem Auftrag einer jeden oder mehrerer Schichten wird bei dieser Ausführungsform der Druckkopf mit der Düsenanordnung über eine schwarze Lichtschutzklappe, die über ein Gelenk von dem Druckkopf bewegt wird und diesen optisch von dem Kunststoffmaterial trennt, abgeschirmt. Sobald diese Parkstellung des Druckkopfes erreicht ist, wird eine recht starke Halogenlampe mit hohem UV-Anteil eingeschaltet und für wenige Sekunden eine Lichthärtung vorgenommen. Hieraufhin wird die Lampe ausgeschaltet und die nächste Schicht aufgetragen. Dieser Zyklus wird wiederholt, bis das Zahnersatzteil vollständig erzeugt ist. Anschließend hieran wird eine Warmhärtung vorgenommen, die die vollständige Auspolymerisierung sicherstellt.

In einem modifizierten Verfahren wird anstelle des Ausschaltens die Lichtquelle optisch abgeschirmt, während der Druckkopf die nächste Schicht aufträgt. Hierdurch ist die Lebensdauer der Lichtquelle verbessert.

## Patentansprüche

1. Verfahren zur Herstellung eines Kunststoffteils, bei dem eine Unterlage bereitgestellt und auf diese wenigstens ein Material für das Kunststoffteil schichtweise über eine Düsenanordnung aufgetragen wird, wobei nach dem Auftragen einer oder mehrerer Schichten eine Aushärtung erfolgt, bevor weitere Schichten aufgetragen werden, wobei die Schicht ein polymerisierbarer Kunststoff mit einer solchen Viskosität ist, mit der die Verarbeitung des Kunststoffes mit der Düsenanordnung in unpolymerisiertem Zustand erfolgen kann, und dass diese Schicht von der Düsenanordnung beabstandet polymerisiert wird, **dadurch gekennzeichnet, dass** die Aushärtung jeder neuaufgetragenen Schicht unvollständig vorgenommen wird und erst durch wenigstens eine nachfolgende Schicht hindurch abgeschlossen wird.

2. Verfahren nach Anspruch 1, **dadurch gekennzeichnet, dass** die einzelnen Schichten in Tropfenform aufgebracht werden, die Tropfen beim Auf treffen auf die Unterlage oder die vorher aufgebrachten Schichten ihren Aggregatzustand oder ihre Viskosität ändern, so dass die Schicht mechanisch belastbar oder mechanisch bearbeitbar wird.

3. Verfahren nach den Ansprüchen 1 und 2, **dadurch gekennzeichnet, dass** die Polymerisation mittels elektromagnetischer Strahlung, insbesondere Licht, wie IR-Licht, sichtbares und/oder UV-Licht erfolgt, wobei die Düsen während der Polymerisation gegen die elektromagnetischen Strahlen abgeschirmt werden.

4. Verfahren nach einem der vorhergehenden Ansprüche, **dadurch gekennzeichnet, dass** soweit eine Schicht derart polymerisiert wird, dass sie eine ausreichende Festigkeit für das Auftragen der nächsten Schicht über ein dreidimensionales Druckverfahren aufweist, wird sie in dem nächsten und den folgenden Schritten fertig polymerisiert.

5. Verfahren nach einem der vorhergehenden Ansprüche, **dadurch gekennzeichnet, dass** das Material ein polymerisierbares wachsartiges Dentalmaterial ist, das bis 70 Gew.-% mindestens eines polymerisierbaren Monomers und/oder Oligomers, 0,01 bis 10 Gew.-%, bevorzugt 0,5 bis 5 Gew.-% und ganz besonders bevorzugt 0,5 bis 2 Gew.-% eines Polymerisationsinitiators und mindestens 20 Gew.-% einer Mischung aus wachsartigen oder flüssigen Monomeren sowie Farbpigmente enthält und in einem geringen Bereich einer Temperaturänderung eine Änderung des Aggregatzustands oder der Viskosität besitzt.

6. Verfahren nach einem der vorhergehenden Ansprüche, **dadurch gekennzeichnet, dass** anstelle der Polymerisation oder zusätzlich zur Polymerisation eine Polyaddition eingesetzt wird.

7. Verfahren nach einem der vorhergehenden Ansprüche, **dadurch gekennzeichnet, dass** das Material vor dem Auftragen erwärmt wird, jedoch deutlich unterhalb der Polymerisationstemperatur.

8. Verfahren nach einem der vorhergehenden Ansprüche, **dadurch gekennzeichnet, dass** nach der Härtung, vorzugsweise Lichthärtung, eine thermische Nachbehandlung vorgenommen wird.

9. Verfahren nach einem der vorhergehenden Ansprüche, **dadurch gekennzeichnet, dass** das Material als wachsartige polymerisierbare Substanz einen Ester einer Karbonsäure mit einem polymerisationsfähigen Alkohol oder einen Ester eines Alkohols mit einem polymerisationsfähigen Karbonsäurederivat mit einem Gewichtsanteil von etwa 20 bis 99.99% enthält.

10. Verfahren zur Herstellung einer Dentalrestauration, **dadurch gekennzeichnet, dass** ein Verfahren gemäß Anspruch 1 zur Herstellung von Zahnersatzteilen, vorzugsweise Prothesengrundkörpern, eingesetzt wird, und dass für deren Herstellung ein eingefärbtes Material oder Materialien in unterschiedlichen Farben verwendet werden.

11. Verfahren nach Anspruch 10, **dadurch gekennzeichnet, dass** im Arbeitsbereich der Düsenanordnung gleichzeitig mehrere Dentalrestaurationen parallel hergestellt werden.

12. Verfahren nach einem der vorhergehenden Ansprüche, **dadurch gekennzeichnet, dass** die oberste, der Düsenanordnung am nächsten liegende aufzubringende Schicht eine größere Transparenz als die darunter liegenden Schichten aufweist.

13. Verfahren nach einem Ansprüche 1 bis 11, **dadurch gekennzeichnet, dass** als erste Schicht die oberste Schicht der Restauration aufgebracht wird, und dass bei Aufbringen einer folgenden Schicht die zuletzt aufgebrachte als Form für die folgende verwendet wird.

14. Dentalrestaurationsteil, **dadurch gekennzeichnet, dass** es durch eine dreidimensionale Drucktechnik unter Anwendung von zwischengeschalteten Polymerisationsschritten während des Schichtaufbaus hergestellt ist, wobei jede neu gebildete Schicht unvollständig ausgehärtet ist und erst durch wenigstens eine nachfolgende Schicht hindurch fertig gehärtet ist.

## Claims

1. A method of producing a plastics part, in which a base is prepared and on the latter at least one material for the plastics part is applied in layers via a nozzle assembly, wherein after the application of one or more layers curing takes place before further layers are applied, wherein the layer is a polymerisable plastics material of a viscosity with which the processing of the plastics material can be effected with the nozzle assembly in an unpolymerisable state, and in that this layer is polymerised at a distance from the nozzle assembly, **characterised in that** the curing of each newly applied layer is carried out incompletely and is concluded only by at least one subsequent layer.

2. A method according to Claim 1, **characterised in that** the individual layers are applied in drop form and, upon encountering the base or the previously applied layers, the drops change their physical aggregation state or their viscosity so that the layer can mechanically loaded or mechanically machined.

3. A method according to Claims 1 and 2, **characterised in that** the polymerisation is effected by means of electromagnetic radiation, in particular light, such as IR light, visible and/or UV light, wherein during the polymerisation the nozzles are shielded from the electromagnetic rays.

4. A method according to any one of the preceding Claims, **characterised in that** if the layer is polymerised in such a way that it has sufficient strength for the application of the next layer via a three-dimensional printing process, it is completely polymerised in the next and following stages.

5. A method according to any one of the preceding Claims, **characterised in that** the material is a polymerisable wax-like dental material which contains up to 70 % by weight of at least one polymerisable monomer and/or oligomer, 0.01 to 10 % by weight, preferably 0.5 to 5 % by weight and quite especially preferably 0.5 to 2 % by weight of a polymerisation initiator and at least 20 % by weight of a mixture of wax-like or liquid monomers, as well as coloured pigments, and within a small range of temperature change has a change in the physical aggregation state or viscosity.

6. A method according to one of the preceding Claims, **characterised in that** polyaddition is used instead of the polymerisation or additionally to the polymerisation.

7. A method according to one of the preceding Claims, **characterised in that**, prior to the application, the material is heated but well below the polymerisation temperature.

8. A method according to any one of the preceding Claims, **characterised in that**, afer the hardening, preferably light hardening, a thermal aftertreatment is carried out.

9. A method according to any one of the preceding Claims, **characterised in that** the material contains as wax-like polymerisable substance an ester of a carboxylic acid with a polymerisable alcohol or an ester of an alcohol with a polymerisable carboxylic acid derivative with a percentage by weight of approximately 20 to 99.99 %.

10. A method for carrying out a dental restoration, **characterised in that** a method according to Claim 1 for producing dental replacement parts, preferably prosthesis structures, is used, and **in that** a coloured material or materials in different colours are used for their production.

11. A method according to Claim 10, **characterised in that** within the operating range of the nozzle assembly simultaneously several dental restorations are carried out in parallel.

12. A method according to any one of the preceding Claims, **characterised in that** the uppermost layer to be applied, situated nearest to the nozzle assembly, exhibits greater transparency than the layers disposed thereunder.

13. A method according to any one of Claims 1 to 11, **characterised in that**, as the first layer, the uppermost layer of the restoration is applied, and **in that** when applying a subsequent layer the last one applied is used as a mould for the following layer.

14. A dental restoration part, **characterised in that** it is produced by a three-dimensional printing technique using interposed polymerisation steps during the layer build-up, wherein each newly formed layer is cured incompletely and is completely hardened only by at least one subsequent layer.

## Revendications

1. Procédé pour fabriquer une pièce en plastique, dans lequel un support est fourni et au moins un matériau pour la pièce en plastique est appliqué sur ce support par couches au moyen d'un dispositif à buses, moyennant quoi un durcissement intervient après l'application d'une ou de plusieurs couches avant que d'autres couches ne soient appliquées, dans lequel la couche est en un matériau synthétique polymérisable ayant une viscosité qui permet le traitement du matériau synthétique avec le dispositif à buses dans l'état non polymérisé, et de telle sorte que cette couche est polymérisée à distance du dispositif à buses, **caractérisé en ce que** le durcissement de chaque nouvelle couche appliquée est effectué de manière incomplète et s'achève à travers au moins une couche suivante.

2. Procédé selon la revendication 1, **caractérisé en ce que** les différentes couches sont appliquées sous forme de gouttes, les gouttes modifient leur état de la matinée ou leur viscosité au contact du support ou des couches appliquées auparavant, de telle sorte que la couche est sollicitable sur le plan mécanique ou usinable sur le plan mécanique.

3. Procédé selon les revendications 1 et 2, **caractérisé en ce que** la polymérisation s'effectue par rayonnement électromagnétique, en particulier de la lumière comme la lumière infrarouge, la lumière visible et/ou la lumière UV, les buses étant protégées contre les rayons électromagnétiques pendant la polymérisation.

4. Procédé selon l'une quelconque des revendications précédentes, **caractérisé en ce que**, dans la mesure où une couche est polymérisée de telle sorte qu'elle présente une résistance suffisante pour l'application de la couche suivante au moyen d'un procédé d'impression à trois dimensions, elle est polymérisée de façon définitive au cours de l'étape suivante et des étapes suivantes.

5. Procédé selon l'une quelconque des revendications, précédentes, **caractérisé en ce que** le matériau est un matériau dentaire du type cire, polymérisable, qui contient jusqu'à 70 % en poids d'au moins un monomère et/ou oligomère polymérisable, de 0,01 à 10 % en poids et de préférence de 0,5 à 5 % en poids et de préférence encore de 0,5 à 2 % en poids d'un initiateur de polymérisation et au moins 20 % en poids d'un mélange constitué de monomères du type cire ou liquides et des pigments de couleur et présente une variation de l'état de la matière ou de la viscosité dans une faible plage de variation de température.

6. Procédé selon l'une quelconque des revendications précédentes, **caractérisé en ce qu'**on utilise une polyaddition au lieu de la polymérisation ou en supplément de la polymérisation.

7. Procédé selon l'une quelconque des revendications précédentes, **caractérisé en ce que** le matériau est réchauffé avant application, mais sensiblement au-dessous de la température de polymérisation.

8. Procédé selon l'une quelconque des revendications précédentes, **caractérisé en ce qu'**un traitement ultérieur thermique est effectué après le durcissement, de préférence un durcissement à la lumière.

9. Procédé selon l'une quelconque des revendications précédentes, **caractérisé en ce que** le matériau en tant que substance polymérisable du type cire contient un ester d'un acide carboxylique avec un alcool apte à la polymérisation ou un ester d'un alcool avec un dérivé d'acide carboxylique apte à la polymérisation avec une teneur en poids d'environ 20 à 99,99 %.

10. Procédé pour la fabrication d'une restauration dentaire, **caractérisé en ce qu'**on utilise un procédé selon la revendication 1 pour la fabrication de parties de prothèse, de préférence des corps de base de prothèse et **en ce que**, pour leur fabrication, on utilise un matériau teinté ou des matériaux dans différentes couleurs.

11. Procédé selon la revendication 10, **caractérisé en ce que** plusieurs restaurations dentaires sont effectuées en parallèle et simultanément dans la zone de travail du dispositif à buses.

12. Procédé selon l'une quelconque des revendications précédentes, **caractérisé en ce que** la couche supérieure, à appliquer le plus près possible du dispositif à buses, présente une transparence supérieure aux couches sous-jacentes.

13. Procédé selon l'une quelconque des revendications 1 à 11, **caractérisé en ce que** la couche supérieure de la restauration est appliquée comme première couche et **en ce que**, en cas d'application d'une couche suivante, la dernière couche appliquée est utilisée comme forme pour la couche suivante.

14. Elément de restauration dentaire, **caractérisé en ce qu'**il est fabriqué par une technique d'impression à trois dimensions avec l'utilisation d'étapes de polymérisation intercalées pendant l'élaboration de la couche, chaque nouvelle couche formée étant durcie de façon incomplète et n'étant durcie de façon définitive qu'à travers au moins une couche suivante.
